# EUROPÄISCHE PATENTSCHRIFT

(11) **EP 1 521 275 B1**
(45) Veröffentlichungstag und Bekanntmachung des Hinweises auf die Patenterteilung: **27.12.2006**
(21) Anmeldenummer: 04292181.7
(22) Anmeldetag: 10.09.2004
(51) Int. Cl.: H01B 3/30, H01B 7/29, C08K 3/40

(54) **Isoliermaterial auf der Basis von polymerem Kunststoff**
Insulating material based on synthetic polymer
Matière isolante à base de polymère synthétique

(30) Priorität: 02.10.2003 DE 10345955
(43) Veröffentlichungstag der Anmeldung: 06.04.2005
(73) Patentinhaber: Nexans, 75008 Paris (FR)
(72) Erfinder: Müller, Friedrich, 91207 Lauf (DE); Dinkelmeyer, Christoph, 91207 Lauf (DE); Gemmel, Alfred, 90562 Kalchreuth (DE)
(74) Vertreter: Döring, Roger

(56) Entgegenhaltungen:
- EP-A- 0 373 757
- DE-A- 10 022 261

## Beschreibung

Die Erfindung bezieht sich auf ein Isoliermaterial auf der Basis von polymerem Kunststoff, dem zur Stabilisierung im Brandfall Glaspartikel beigemengt sind, die aus Glassorten mit unterschiedlichen Erweichungstemperaturen bestehen (EP 0 978 128 B1)

Ein solches Isoliermaterial wird beispielsweise für den Mantel von elektrischen und optischen Leitungen bzw. Kabeln oder auch für die Isolierung der Adern derselben benötigt. Bei derartigen Leitungen handelt es sich beispielsweise um Starkstromleitungen oder der Nachrichten- bzw. Datenübertragung dienende Leitungen. Durch das spezielle Isoliermaterial soll der Funktionserhalt einer entsprechenden Leitung im Falle eines Brandes für eine bestimmte Zeitdauer sichergestellt werden. Maschinen, Apparate und Geräte sollen während dieser Zeitdauer noch mit Strom versorgt und es sollen in dieser Zeit auch noch Informationen übertragen werden können. Die Zeitdauer soll so bemessen sein, daß beispielsweise alle in einem Gebäude befindlichen Personen informiert werden können und die Beleuchtung in dem Gebäude solange eingeschaltet bleibt, bis die Personen dasselbe verlassen und gegebenenfalls noch Materialien in Sicherheit gebracht haben. Die vom Installateur entsprechender Leitungen vorgebbare Zeitdauer liegt beispielsweise zwischen 30 Minuten und 3 Stunden.

Bei der bekannten Leitung nach der EP 0 106 708 B1 wird ein Isoliermaterial verwendet, das aus einem Micaband, einer Schicht aus Polytetrafluorethylen (PTFE) und einem mit PTFE bestrichenen Glasgewebe besteht. Das PTFE ist bis etwa 600 °C beständig. Es zerfällt bei höheren Temperaturen zu Asche. Eine entsprechend isolierte Leitung hat eine in vielen Fällen nicht zulässige hohe Brandlast. Sie entwickelt im Brandfalle wegen des Fluors toxische und chemisch aggressive Gase (Rauch), durch welche Metalle und elektrische bzw. elektronische Schaltungen angegriffen und zerstört werden können.

In der EP 0 968 502 A1 ist ein Isoliermaterial für Kabel und Leitungen beschrieben, das aus einem polymeren Kunststoff als erster Komponente sowie Glas oder keramisierbarem oder kristallinem Material als zweiter Komponente und beispielsweise Aluminiumoxid als dritter Komponente besteht. Die zweite Komponente soll bei einer oberhalb der Schmelztemperatur der ersten Komponente liegenden Temperatur zu schmelzen beginnen, während die dritte Komponente im Bereich von 1000 °C schmelzen soll. Es soll mit diesem Isoliermaterial ein Funktionserhalt für Kabel und Leitungen in einem Temperaturbereich von 450 °C bis 1210 °C erreicht werden. Dazu werden dem Isoliermaterial mit relativ hohem Aufwand die erwähnten, sehr unterschiedlichen Zusätze beigemengt, die zur Bildung einer geschlossenen Schicht größtenteils erst noch umgewandelt werden müssen.

Aus der eingangs erwähnten EP 0 978 128 B1 geht ein flammwidriges Isoliermaterial zum Funktionserhalt von elektrischen Kabeln hervor, bei dem einem siliziumorganischen Polymer Glasfritten aus alkaliarmen Gläsern sowie Passivierungsglas beigegeben sind. Dem Polymer wird zur Stabilisierung also nur Glas beigemengt. Die alkaliarmen Gläser haben gemäß dieser Druckschrift einen Schmelzpunkt von weniger als 750 °C, während das Passivierungsglas einen Schmelzpunkt von nicht höher als 710 °C aufweist. Bei diesem Isoliermaterial wird eine den Funktionserhalt sichernde Glasschicht im Bereich von 700 °C gebildet. Der Funktionserhalt kann somit für einen großen Temperaturbereich ab etwa 400 °C nur für Isoliermoterialien auf der Basis von siliziumorganischen Polymeren erreicht werden, die selbst erst bei relativ hohen Temperaturen schmelzen und dabei eine Glasschicht bilden.

Die EP-A-0373757 beschreibt ein Material zur Isolierung eines elektrischen Leiters auf der Basis von polymerem Kunststoff. Dieses Material enthält Glaspartikel zur Stabilisierung desselben im Falle eines Brandes. Für einen Temperaturbereich von 350 °C bis 1000 °C soll mehr als eine Glassorte eingesetzt werden. Mindestens eine der Glassorten soll zur Bildung von Glaskeramik auskristallisieren. Verwendbare Gläser sind neben Glaspulver Borsilikatglas und Aluminiumsilikatglas, ebenfalls in Pulverform.

Der Erfindung liegt die Aufgabe zugrunde, das eingangs geschilderte Isoliermaterial so zu verbessern, daß es einen Funktionserhalt von damit isolierten Leitungen, Kabeln und Adern mit wenig Aufwand in einem wesentlich erweiterten Temperaturbereich sichert.

Diese Aufgabe wird gemäß der Erfindung dadurch gelöst, daß für die Glaspartikel mindestens drei Glassorten mit unterschiedlichen Erweichungstemperaturen eingesetzt sind, und zwar eine erste Glassorte mit einer Erweichungstemperatur von unter etwa 470 °C, eine zweite Glassorte mit einer Erweichungstemperatur von über etwa 470 °C und unter etwa 620 °C und eine dritte Glassorte mit einer Erweichungstemperatur von über etwa 760 °C.

Diesem Isoliermaterial ist zur Stabilisierung im Brandfall ausschließlich Glas beigemengt. Der Aufwand zu seiner Herstellung ist also gering. Das Glas hat den Vorteil, daß es als solches unmittelbar vorhanden ist. Umwandlungsprozesse im Brandfall, wie beispielsweise Keramisieren, sind dadurch nicht erforderlich. Die mindestens drei unterschiedlichen Glassorten sichern den Funktionserhalt von Leitungen, Kabeln und Adern, die von einem entsprechenden Isoliermaterial umgeben sind, über einen weiten Temperaturbereich. Dieser Schutz beginnt bei einer Temperatur von etwa 400 °C, bis zu der übliche Polymere beständig sind. Es bleibt von dieser Temperatur an lückenlos bis 800 °C und mehr erhalten. Die mindestens drei unterschiedlichen Glassorten mit unterschiedlichen Erweichungstemperaturen ergeben zunächst bei einer Temperatur von weniger als 470 °C eine die Leitung, das Kabel oder die Adern umgebende isolierende Glasschicht, die durch die darin enthaltenen Glaspartikel der beiden anderen Glassorten stabilisiert ist. Diese stabile Glasschicht bleibt bei im Brandfall ansteigender Temperatur erhalten, wenn als nächstes die zweite Glassorte zu schmelzen beginnt. Bei sehr hohen Temperaturen von 800 °C und mehr bleibt die Glasschicht durch die dritte Glassorte als isolierende Schicht zumindest für die Zeit erhalten, die für den Funktionserhalt erforderlich und vorgeschrieben ist.

In vorteilhaften Ausgestaltungen können dem Isoliermaterial zusätzlich weitere Glaspartikel aus noch anderen Glassorten beigemengt werden, welche die Übergangsbreiche dichter belegen und auch bei Temperaturen von weit über 800 °C noch den gewünschten Funktionsschutz sicherstellen.

Ausführungsbeispiele des Isoliermoterials nach der Erfindung werden im folgenden erläutert.

Als Basismaterial können grundsätzlich alle bekannten polymeren Kunststoffe eingesetzt werden, die vorzugsweise flammwidrig und halogenfrei eingestellt sind. Das sind beispielsweise Polyethylen, Copolymere des Polyethylens, Polyester, Polypropylen, Silikone oder Ethylenvinylacetat.

Dem Isoliermaterial werden Glaspartikel in geeigneter Menge beigemengt. Das sind beispielsweise massive Kugeln oder Hohlkugeln. Sie können Durchmesser von 1 µm bis 70 µm haben, in bevorzugter Ausführungsform von 1 µm bis 20 µm.

Zum Funktionserhalt werden mindestens drei unterschiedliche Glassorten mit unterschiedlichen Erweichungstemperaturen eingesetzt. Dabei werden 100 Teilen eines Basispolymers beispielsweise jeweils 20 bis 1 20 Teile der drei Glassorten hinzugegeben. In bevorzugter Ausführungsform sind es jeweils 20 bis 50 Teile der Glassorten auf 100 Teile Basispolymer. Das Isoliermaterial, auch als Compound bezeichnet, kann mit herkömmlichen Compoundiereinrichtungen hergestellt werden. Das sind beispielsweise Innenmischer, Doppelschneckenextruder oder Ko-Kneter.

Als erste Glassorte kann Lotglas mit einer Erweichungstemperatur von 461 °C verwendet werden, die also unter 470 °C liegt. Dieses Glas enthält weniger als 10 % SiO₂, und mit jeweils 11 % B₂O₃ und Al₂O₃ sowie 75 % PbO.

Als zweite Glassorte kann ein Eisen-Einschmelzglas verwendet werden, mit einer Erweichungstemperatur von 614 °C, die also zwischen 470 °C und 620 °C liegt. Dieses Glas besteht aus 58 % SiO₂ und 20 % NaO₂ sowie jeweils mit weniger als 10 % Al₂O₃, K₂O, CaO, ZnO, BaO und F.

Eine dritte Glassorte mit einer über 760 °C liegenden Erweichungstemperatur ist ein Wolfram-Einschmelzglas. Seine Erweichungstemperatur liegt bei 765 °C. Seine Bestandteile sind 75 % SiO₂ und 16,5 % B₂O₃ sowie jeweils mit unter 10 % Al₂O₂, Na₂O und K₂O.

Dem Isoliermaterial können Füllstoffe hinzugegeben werden, wie Aluminiumtrioxyhydrat, Magnesiumhydroxid, Kreide oder Silikate, bevorzugt Schichtsilikate, wie Betonit oder Illite. Bei 100 Teilen Basispolymer werden beispielsweise zusätzlich 5 bis 80 Teile solcher Füllstoffe hinzugegeben.

Schadensfälle der neueren Vergangenheit zeigen, daß ein Funktionserhalt besonders bei sehr hohen Temperaturen von wesentlicher Bedeutung ist. Dem Basismaterial werden daher mit Vorteil weitere Glaspartikel mit sehr hohen Erweichungstemperaturen beigemengt.

Eine vierte Glassorte mit einer Erweichungstemperatur von über 780 °C ist beispielsweise Geräteglas G20, ein Borosilicatglas. Seine Erweichungstemperatur liegt bei 790 °C. Es besteht aus 78 % SiO₂ und 10 % B₂O₃ sowie mit jeweils weniger als 10 % Al₂O₂, Na₂O und CaO, BaO.

Duran, ein Alkaliborosilicatglas, hat als fünfte Glassorte eine noch höhere Erweichungstemperatur von 815 °C. Dieses Glas besteht aus 80 % SiO₂ und 13 % B₂O₃ sowie mit jeweils weniger als 10 % Al₂O₂, Na₂O, K₂O.

## Patentansprüche

1. Isoliermaterial auf der Basis von polymerem Kunststoff, dem zur Stabilisierung im Brandfall Glaspartikel beigemengt sind, die aus Glassorten mit unterschiedlichen Erweichungstemperaturen bestehen, **dadurch gekennzeichnet, daß** für die Glaspartikel mindestens drei Glassorten mit unterschiedlichen Erweichungstemperaturen eingesetzt sind, und zwar eine erste Glassorte mit einer Erweichungstemperatur von unter 470 °C, eine zweite Glassorte mit einer Erweichungstemperatur von über 470 °C und unter 620 °C und eine dritte Glassorte mit einer Erweichungstemperatur von über 760 °C.

2. Isoliermaterial nach Anspruch 1, **dadurch gekennzeichnet, daß** die erste Glassorte Lotglas mit einer Erweichungstemperatur von 461 °C ist.

3. Isoliermaterial nach Anspruch 1, **dadurch gekennzeichnet, daß** die zweite Glassorte Eisen-Einschmelzglas mit einer Erweichungstemperatur von 614 °C ist.

4. Isoliermaterial nach Anspruch 1, **dadurch gekennzeichnet, daß** die dritte Glassorte Wolfram-Einschmelzglas mit einer Erweichungstemperatur von 765 °C ist.

5. Isoliermaterial nach einem der Ansprüche 1 bis 4, **dadurch gekennzeichnet, daß** Glaspartikel einer vierten Glassorte mit einer Erweichungstemperatur von über 780 °C eingesetzt sind.

6. Isoliermaterial nach einem der Ansprüche 1 bis 5, **dadurch gekennzeichnet, daß** Glaspartikel einer fünften Glassorte mit einer Erweichungstemperatur von über 800 °C eingesetzt sind.

7. Isoliermaterial nach einem der Ansprüche 1 bis 6, **dadurch gekennzeichnet, daß** die Glaspartikel als Massivkugeln und/oder Hohlkugeln ausgebildet sind.

8. Isoliermaterial nach einem der Ansprüche 1 bis 7, **dadurch gekennzeichnet, daß** der Durchmesser der Glaspartikel zwischen 1 µm und 70 µm, vorzugsweise zwischen 1 µm und 20 µm, liegt.

9. Isoliermaterial nach Anspruch 1, **dadurch gekennzeichnet, daß** der polymere Kunststoff halogenfrei ist.

10. Isoliermaterial nach Anspruch 1, **dadurch gekennzeichnet, daß** der polymere Kunststoff flammwidrig ist.

## Claims

1. Polymer-based insulating material with which glass particles comprising types of glass with different softening temperatures are admixed for stabilization in the event of a fire, **characterized in that** at least three types of glass with different softening temperatures are used for the glass particles, to be precise a first type of glass with a softening temperature of under 470°C, a second type of glass with a softening temperature of over 470°C and under 620°C and a third type of glass with a softening temperature of over 760°C.

2. Insulating material according to Claim 1, **characterized in that** the first type of glass is solder glass with a softening temperature of 461°C.

3. Insulating material according to Claim 1, **characterized in that** the second type of glass is iron-fusible glass with a softening temperature of 614°C.

4. Insulating material according to Claim 1, **characterized in that** the third type of glass is tungsten-fusible glass with a softening temperature of 765°C.

5. Insulating material according to one of Claims 1 to 4, **characterized in that** glass particles of a fourth type of glass with a softening temperature of over 780°C are used.

6. Insulating material according to one of Claims 1 to 5, **characterized in that** glass particles of a fifth type of glass with a softening temperature of over 800°C are used.

7. Insulating material according to one of Claims 1 to 6, **characterized in that** the glass particles are formed as solid beads and/or hollow beads.

8. Insulating material according to one of Claims 1 to 7, **characterized in that** the diameter of the glass particles lies between 1 µm and 70 µm, preferably between 1 µm and 20 µm.

9. Insulating material according to Claim 1, **characterized in that** the polymeric material is halogen-free.

10. Insulating material according to Claim 1, **characterized in that** the polymeric material is flame-retardant.

## Revendications

1. Matériau d'isolation à base d'un matériau synthétique polymère, auquel on a mélangé, en vue de la stabilisation en cas d'incendie, des particules de verre qui sont constituées par des types de verre présentant des températures de ramollissement différentes, **caractérisé en ce qu'**on utilise pour les particules de verre au moins trois types de verre présentant des températures de ramollissement différentes, c'est-à-dire un premier type de verre présentant une température de ramollissement inférieure à 470°C, un deuxième type de verre présentant une température de ramollissement supérieure à 470°C et inférieure à 620°C et un troisième type de verre présentant une température de ramollissement supérieure à 760°C.

2. Matériau d'isolation selon la revendication 1, **caractérisé en ce que** le premier type de verre est un verre à plomb présentant une température de ramollissement de 461°C.

3. Matériau d'isolation selon la revendication 1, **caractérisé en ce que** le deuxième type de verre est un verre à fusion à base de fer présentant une température de ramollissement de 614°C.

4. Matériau d'isolation selon la revendication 1, **caractérisé en ce que** le troisième type de verre est un verre à fusion à base de tungstène présentant une température de ramollissement de 765°C.

5. Matériau d'isolation selon l'une quelconque des revendications 1 à 4, **caractérisé en ce qu'**on utilise des particules de verre d'un quatrième type de verre présentant une température de ramollissement supérieure à 780°C.

6. Matériau d'isolation selon l'une quelconque des revendications 1 à 5, **caractérisé en ce qu'**on utilise des particules de verre d'un cinquième type de verre présentant une température de ramollissement supérieure à 800°C.

7. Matériau d'isolation selon l'une quelconque des revendications 1 à 6, **caractérisé en ce que** les particules de verre sont formées sous forme de billes massives et/ou creuses.

8. Matériau d'isolation selon l'une quelconque des revendications 1 à 7, **caractérisé en ce que** le diamètre des particules de verre est situé entre 1 µm et 70 µm, de préférence entre 1 µm et 20 µm.

9. Matériau d'isolation selon la revendication 1, **caractérisé en ce que** le matériau synthétique polymère est exempt d'halogènes.

10. Matériau d'isolation selon la revendication 1, **caractérisé en ce que** le matériau synthétique polymère est ininflammable.
